# EUROPÄISCHE PATENTANMELDUNG

(11) **EP 1 434 034 A1**
(43) Veröffentlichungstag der Anmeldung: **30.06.2004**
(21) Anmeldenummer: 02028959.1
(22) Anmeldetag: 24.12.2002
(51) Int. Cl.: G01F 1/32

(54) **Strömungssensor**

(71) Anmelder: Grundfos a/s, 8850 Bjerringbro (DK)
(72) Erfinder: Krog, Jens Peter, Torup 8860 Ulstrup (DK); Pedersen, Nicholas, 8900 Randers (DK); Anderson, Per Ellemose, 8850 Bjerringbro (DK)
(74) Vertreter: Hemmer, Arnd, Dipl.-Ing.

(57) **Zusammenfassung**

Die Erfindung betrifft einen Strömungssensor mit einer in eine Strömung hineinragenden Obstruktion (8) und zumindest einer Messsonde (10) zum Ausmessen eines von der Obstruktion (8) erzeugten Wirbels. Die Messsonde (10) weist zumindest eine Membran (12) und ein direkt auf der Membran (12) angeordnetes Messelement zum Erfassen der Membranauslenkung auf.

## Beschreibung

Die Erfindung betrifft einen Strömungssensor.

Es sind verschiedene Arten von Strömungssensoren bekannt, um den Durchfluss in Rohrleitungen beispielsweise von Heizungssystemen zu bestimmen. So ist aus US 4,475,409 ein Vortex-Durchflussmesser bekannt. Dieser Sensor weist eine in die Strömung hineinragende Obstruktion auf, welche an zwei einander entgegengesetzten, sich parallel zu der Strömung erstreckenden Seiten jeweils eine Membran aufweist. Zwischen den Membranen ist im Inneren der Obstruktion ein piezzoelektrischer Stab als Druckmesselement angeordnet, welcher in Abhängigkeit der Druckdifferenz zwischen beiden Membranen ausgelenkt wird, um den Differenzdruck zu erfassen. Über diesen Differenzdruck lässt sich in Kenntnis der Form der Obstruktion die Strömungsgeschwindigkeit bestimmen.

Diese bekannte Anordnung hat den Nachteil, dass der Aufbau der Obstruktion mit dem innenliegenden Druckmesselement sehr aufwändig ist. So müssen die einzelnen Membranen nacheinander eingesetzt und anschließend der piezzosensitive Stab zwischen den Membranen angeordnet werden. Ferner erfordert dieser Sensor einen relativ großen Bauraum, so dass er sich nicht überall einsetzen lässt.

Es ist Aufgabe der Erfindung, einen verbesserten Strömungssensor zu schaffen, welcher eine kostengünstigere Herstellung, einfachere Montage und breiteres Einsatzgebiet des Sensors ermöglicht.

Diese Aufgabe wird durch einen Strömungssensor mit den im Anspruch 1 angegebenen Merkmalen gelöst. Bevorzugte Ausführungsformen ergeben sich aus den Unteransprüchen.

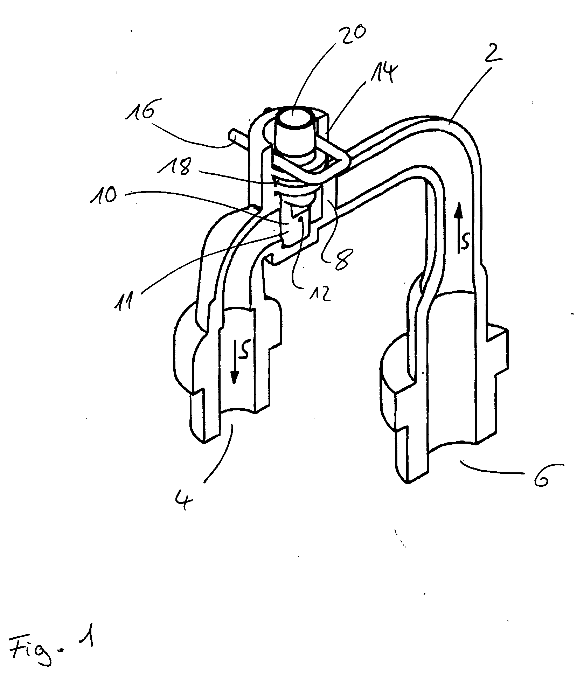

Der erfindungsgemäße Strömungssensor weist eine in eine Strömung hineinragende Obstruktion und eine Messsonde zum Ausmessen eines von der Obstruktion erzeugten Wirbels auf. Aus den Eigenschaften des erzeugten Wirbels kann bei bekannter Größe der Obstruktion die Strömungsgeschwindigkeit der Strömung bestimmt werden. Dazu können Druckunterschiede und/oder Frequenzen des Wirbels erfasst werden. Die Messsonde weist zumindest eine Membran und ein direkt auf der Membran angeordnetes Messelement zum Erfassen der Membranauslenkung auf. Diese Anordnung ermöglicht einen sehr einfachen Aufbau des Strömungssensors, da keine Vielzahl von Einzelteilen zusammengesetzt werden muss. Vielmehr ist das Messelement bzw. sind die Messelemente zum Erfassen der Membranauslenkung direkt auf der Membran angeordnet, so dass die Membran mit dem Messelement als ein Bauteil in den Strömungssensor integriert werden kann. Ferner kann durch diesen Aufbau eine wesentliche kompaktere Ausgestaltung des Strömungssensors geschaffen werden, welche ein größeres Einsatzfeld ermöglicht. Ein solcher Strömungssensor weist eine größere Empfindlichkeit auf, so dass genauere Messungen ermöglicht werden. Als Membran mit direkt auf der Membran angeordnetem Messelement kann beispielsweise eine Membran eingesetzt werden, wie sie als Druck- oder Differenzdrucksensor in der europäischen Patentanmeldung 97 105 396 bzw. der deutschen Patentanmeldung 196 14 458 beschrieben ist. Bezüglich des genauen Aufbaus der Membran wird auf diese Patentanmeldungen und insbesondere auf die Figur 1 dieser Patentanmeldungen und die zugehörige Beschreibung verwiesen. Die Membran erstreckt sich bevorzugt parallel zur Strömungsrichtung.

Vorzugsweise sind die Obstruktion und die Messsonde in einem Rohrleitungsabschnitt angeordnet. Dieser Rohrleitungsabschnitt kann Teil einer Rohrleitung eines Heizungssystems oder ein spezieller als Messstrecke ausgebildeter Rohrleitungsabschnitt sein, welcher an geeigneter Stelle beispielsweise in ein Heizungssystem zur Erfassung der Strömungsgeschwindigkeit integriert werden kann.

Bevorzugt weist der Rohrleitungsabschnitt einen Durchmesser D auf, welcher größer als 10 mm ist. In bevorzugten Ausführungsformen kann der Rohrdurchmesser beispielsweise 10, 12 oder 16 mm betragen.

Die Obstruktion ist vorzugsweise einstückig mit dem Rohrleitungsabschnitt ausgebildet. So kann die Obstruktion beispielsweise als Steg, welcher sich in Durchmesserrichtung durch den Rohrleitungsabschnitt erstreckt, ausgebildet sein. Ein solcher Steg kann einstückig mit dem Rohrleitungsabschnitt bzw. der Rohrleitung beispielsweise im Spritzguss aus Kunststoff gefertigt werden. Bei der Herstellung als Gussteil kann die Obstruktion beispielsweise in einem zu verwendenden Schmelzkern ausgestaltet werden.

Zur Bestimmung eines absoluten Druckwertes ist die Membran vorzugsweise von einer Seite mit einem Druck beaufschlagbar. An der anderen Seite der Membran liegt ein Referenzdruck an, gegen den der zu bestimmende Druckwert gemessen wird. Der Referenzdruck kann beispielsweise der Umgebungsdruck oder der Druck in einem abgeschlossenen Referenzvolumen sein. Diese Anordnung ermöglicht, in einer Strömung im Bereich einer Obstruktion absolute Druckwerte zu bestimmen, um die von der Obstruktion erzeugten Wirbel messtechnisch auszuwerten. Die erfassten Druckwerte sind bei bekannten Umgebungsgrößen, wie Rohrdurchmesser und Abmessung der Obstruktion charakteristische Größen, welche proportional zu der Strömungsgeschwindigkeit sind und somit die Bestimmung der Strömungsgeschwindigkeit bzw. des Durchflusses durch den Rohrleitungsabschnitt ermöglichen.

Alternativ kann die Membran von beiden Seiten mit jeweils einem Druck zur Bestimmung eines Differenzdruckes beaufschlagbar sein. Dies ermöglicht die direkte Bestimmung eines Differenzdruckes in einem von der Obstruktion erzeugten Wirbel, wobei durch den Referenzdruck bei bekannten Abmessungen der Obstruktion und der Rohrleitung ebenfalls die Strömungsgeschwindigkeit bzw. der Durchfluss aus den im Wirbel auftretenden Druckunterschieden bestimmt werden kann. Der erfindungsgemäße Strömungssensor hat gemäß dieser Ausführungsform den Vorteil, dass lediglich eine dünne Membran direkt in der Strömung angeordnet werden muss. Die Membran kann direkt von beiden Seiten mit Druck beaufschlagt werden, da das Messelement bzw. die Messelemente zur Bestimmung der Membranauslenkung direkt auf der Membran angeordnet ist. Die Ausgestaltung der Membran entspricht dabei bevorzugt der in der europäischen Patentanmeldung 97 105 396.2 offenbarten Membran. Bei dieser Membran sind im Randbereich auf der Membranoberfläche piezzosensitive Widerstände angeordnet, welche bei Verformung ihren elektrischen Widerstand ändern und so die Bestimmung der Membranauslenkung ermöglichen. Die Anordnung nur einer Membran ermöglicht einen schnelleren und empfindlicheren Strömungssensor zu schaffen, welcher eine genauere Erfassung von Strömungsgeschwindigkeiten, insbesondere geringer Strömungsgeschwindigkeiten ermöglicht. Ferner ermöglicht die Anordnung nur einer Membran den Aufbau sehr kleiner Messsonden und damit sehr kleiner Strömungssensoren, so dass der erfindungsgemäße Strömungssensor in nahezu jede Anlage, in der eine Strömungsgeschwindigkeit bestimmt werden soll, integrierbar ist.

Vorzugsweise ist die Membran in einer Halterung druckdicht eingespannt und eine elektrisch isolierende Schicht unmittelbar auf die Membran und das auf diese angeordnete Messelement aufgebracht, wobei die isolierende Schicht von einer zumindest flüssigkeitsdichten amorphen Metallschicht überdeckt ist. Dieser Aufbau entspricht dem in der europäischen Patentanmeldung 97 105 396.2 offenbarten Aufbau. Die elektrisch isolierende Schicht kann extrem dünn sein, da sie lediglich die Aufgabe hat, sicher zu stellen, dass die amorphe Metallschicht, die auf der Membran angeordneten Leiter und Elektronikbauteile nicht kurzschließt. Andererseits ist sie aufgrund der Abdeckung durch die amorphe Metallschicht geschützt. Durch diesen dünnen Aufbau der isolierenden Schicht und der amorphen Metallschicht wird die Auslenkung der Membran und damit die Messgenauigkeit nicht spürbar beeinträchtigt. Die amorphe Metallschicht sorgt für einen wirksamen Schutz der Membran und der auf der Membran angeordneten Messelemente sowie gegebenenfalls weiterer Elektronikbauteile, welche auf der Membran angeordnet sind. Da die Metallschicht nicht in Kristallstruktur, sondern in amorpher Struktur vorliegt, was auch als Metallglas bezeichnet wird, kann sie zum einen hochkorrosionsfest sein und ist zum anderen schon bei dünnster Schichtdicke flüssigkeits- und auch gasdicht. Derartige amorphe Metallschichten sind beispielsweise aus EP 0 537 710 A1, DE 42 16 150 A1 und DE 38 14 444 A1 bekannt. Bezüglich des übrigen Aufbaus der Membran wird auf oben genannte europäische Patentanmeldung 97 105 396.2 verwiesen.

Weiter bevorzugt ist die Messsonde in einem Gehäuse angeordnet, welches in eine Öffnung in dem Rohrleitungsabschnitt eingesetzt ist. Die Öffnung kann als standardisierte Aufnahme für Messaufnehmer einstückig mit der Rohrleitung ausgebildet sein, so dass das Gehäuse mit der Messsonde lediglich in die Öffnung eingesteckt werden muss und dort kraft- und/oder formschlüssig fixiert werden muss. Zusätzlich sind entsprechende Dichtungselemente vorgesehen, um das Gehäuse gegenüber dem Rohrleitungsabschnitt abzudichten. Ein solches Gehäuse ist beispielsweise aus EP 02 008 386 bekannt und dort als Gehäuse 22 bezeichnet. Diesbezüglich wird insbesondere auf die Figur 8 und die zugehörige Beschreibung dieser europäischen Patentanmeldung verwiesen. Der gesamte Aufbau des Gehäuses und der Lagerung und Anordnung der Membran entspricht vorzugsweise der in EP 02 008 386 offenbarten Anordnung.

Weiter bevorzugt ist die Messsonde in die Obstruktion integriert. Auf diese Weise kann ein sehr kleiner Strömungssensor geschaffen werden, da es nicht erforderlich ist, zusätzlich zu der Obstruktion noch die Messsonde in der Strömung anzuordnen. Ferner wird es möglich Obstruktion und Messsonde gleichzeitig als eine Baueinheit zu montieren oder gegebenenfalls bei Beschädigung zu ersetzen.

Alternativ kann die Messsonde in Strömungsrichtung hinter der Obstruktion angeordnet sein. Beispielsweise kann die Obstruktion als Steg einstückig mit der Rohrleitung ausgebildet sein und in Strömungsrichtung hinter dem Steg eine Öffnung zum Einsetzen der Messsonde in der Rohrleitung vorgesehen sein. In diese Öffnung kann dann die Messsonde einfach eingesteckt werden. Dabei kann die Messsonde ein standardisiertes Bauteil sein, welches an verschiedenen Stellen eingesetzt werden kann. Beispielsweise kann es sich bei der Messsonde um einen Drucksensor handeln, wie er in EP 02 008 386 offenbart ist. Es ist somit möglich, einen ohnehin vorhandenen Drucksensor ebenfalls zur Messung eines Durchflusses in einem Rohrleitungsabschnitt zu verwenden. Gleichzeitig kann über diesen Drucksensor, sofern es sich um einen als Absolut-Drucksensor ausgebildeten Drucksensor handelt, ein absoluter Druck in der Strömung gemessen werden. Diese Verwendung eines bekannten Drucksensors in einem Strömungssensor ermöglicht einen äußerst kostengünstigen Aufbau des Strömungssensors, da auf Standardbauteile zurückgegriffen werden kann und zur Ausbildung des Strömungssensors lediglich eine entsprechende Obstruktion in dem Strömungsquerschnitt bzw. Strömungskanal angeordnet werden muss. Neben dieser Obstruktion und dem bekannten Drucksensor, welcher in einer entsprechenden Aufnahme in der Rohrleitung angeordnet wird, sind keine weiteren Bauteile zur Ausbildung des erfindungsgemäßen Strömungssensors erforderlich. Alternativ kann die Obstruktion einteilig oder einstückig mit dem Gehäuse der Messsonde ausgebildet werden, so dass ein Strömungssensor geschaffen wird, der als ein Bauteil in eine Rohrleitung eingesetzt wird.

Vorzugsweise ist in Strömungsrichtung die Vorderkante der Obstruktion von der Mitte der Messsonde um das Maß X beabstandet und der Rohrleitungsquerschnitt, in dem die Obstruktion angeordnet ist, weist einen Durchmesser D auf, wobei das Verhältnis X/D zwischen 1 und 2 liegt. Vorzugsweise liegt das Verhältnis X/D dabei zwischen 1,25 und 1,5 besonders bevorzugt bei 1,3.

Weiter bevorzugt ist in Strömungsrichtung die Vorderkante der Obstruktion von der Mitte der Messsonde um das Maß X beabstandet und die Obstruktion weist quer zur Strömungsrichtung eine Breite d auf, wobei das Verhältnis X/d zwischen 2,4 und 10 liegt. Besonders bevorzugt liegt das Verhältnis X/d zwischen 3,96 und 4,55.

Die Obstruktion weist bevorzugt in Strömungsrichtung eine Länge L und quer zur Strömungsrichtung eine Breite d auf, wobei das Verhältnis L/d zwischen 1 und 2 liegt. Besonders bevorzugt weist dieses Verhältnis einen Wert von 1,57 oder 1,67 auf.

Weiter bevorzugt weist die Obstruktion in Strömungsrichtung eine Länge L und der Rohrleitungsabschnitt, in dem die Obstruktion angeordnet ist, einen Durchmesser D auf, wobei das Verhältnis L/D zwischen 0,4 und 10 liegt. Besonderes bevorzugt liegt der Wert des Verhältnisses zwischen 2,5 und 10.

Die Obstruktion weist vorzugsweise quer zur Strömungsrichtung eine Breite d und der Rohrleitungsquerschnitt, in dem die Obstruktion angeordnet ist, einen Durchmesser D auf, wobei das Verhältnis d/D zwischen 0,2 und 0,4 liegt. Besonderes bevorzugt beträgt der Wert dieses Verhältnisses 0,28 oder 0,33.

Um ein optimales Messergebnis zu erzielen, ist die Obstruktion bevorzugt in Strömungsrichtung mindestens um einen Abstand L₁ hinter einer Krümmung eines Rohrleitungsabschnittes, in dem die Obstruktion angeordnet ist, gelegen, wobei L₁=4*D und D der Durchmesser des Rohrleitungsquerschnittes ist. Durch diesen Abstand L₁ der Obstruktion hinter der letzten Krümmung der Rohrleitung wird sichergestellt, dass keine durch die Krümmung der Rohrleitung erzeugten Verwirbelungen das Messergebnis an dem Wirbel hinter der Obstruktion beeinträchtigen. Nachfolgend wird die Erfindung beispielhaft anhand der beigefügten Figuren beschrieben. In diesen zeigt:
- Figur 1: eine geschnittene perspektivische Ansicht eines Rohrleitungsabschnittes mit dem erfindungsgemäßen Strömungssensor,
- Figur 2: eine Schnittansicht des Rohrleitungsabschnittes gemäß Figur 1 in Längsrichtung der Rohrleitung und
- Figur 3: eine Schnittansicht des Rohrleitungsabschnittes gemäß Figur 2 entlang der Linie III-III in Figur 2

Figur 1 zeigt in einer perspektivischen Schnittansicht eine bevorzugte Ausführungsform des erfindungsgemäßen Strömungssensors. Der Strömungssensor ist in dem Ausführungsbeispiel gemäß Figur 1 in einem Rohrbogen 2 angeordnet. Der Rohrbogen 2 bildet einen Rohrleitungsabschnitt, welcher an seinen Enden 4 und 6 Verbindungselemente zum Anschluss an weitere Rohre beispielsweise in einer Heizungsanlage aufweist. Der Rohrbogen 2 kann z.B. aus Kunststoff oder Metall als Gussteil ausgebildet sein. Der Rohrbogen 2 weist eine U-förmige Gestalt auf, wobei in dem mittleren Schenkel des Rohrbogens 2 eine Obstruktion 8 von definierter Form als definierter Widerstand im Strömungsweg angeordnet ist. Die Obstruktion 8 erstreckt sich als Steg durch das Innere des Rohrbogens 2 in Durchmesserrichtung. Die Obstruktion bildet somit einen Stab, welcher sich quer durch die Rohrleitung erstreckt.

In der Strömungsrichtung S hinter der Obstruktion 8 ist eine Messsonde 10 angeordnet. Die Messsonde 10 dient dazu, den von der Obstruktion 8 in der Strömung erzeugten Wirbel auszumessen. Die Messsonde 10 erfasst dabei Druckwerte innerhalb des erzeugten Wirbels. Da die Obstruktion 8 eine definierte Form aufweist, kann aus den gemessenen Drücken und/oder deren Änderungsfrequenzen durch entsprechende messtechnische Auswertung auf die Strömungsgeschwindigkeit bzw. die Durchflussmenge in dem Rohrbogen 2 geschlossen werden. Die Erfassung einer Strömungsgeschwindigkeit auf diese Weise ist von so genannten Vortex-Durchflusssensoren bekannt.

Erfindungsgemäß handelt es sich bei der Messsonde 10 um eine Messsonde, welche zumindest eine Membran und ein direkt auf der Membran angeordnetes Messelement zum Erfassen der Membranauslenkung aufweist. Eine derartige Membran wurde bereits bei einem Druck- oder Differenzdrucksensor gemäß der europäischen Patentanmeldung 97 105 396.2 eingesetzt. Bezüglich des genauen Aufbaus der Membran wird auf diese Patentanmeldung und insbesondere auf deren Figur 1 und die zugehörige Beschreibung verwiesen. Diese Membran mit den direkt darauf angeordneten Messelementen und einer elektrisch isolierenden Beschichtung sowie einer diese nach außen abdeckenden amorphen Metallschicht hat den Vorteil einer besonderes geringen Membrandicke, was eine große Messempfindlichkeit und schnelle Reaktion des Sensors ermöglicht. Das schnelle Reaktionsvermögen dieser Membran ist besonderes vorteilhaft zum Ausmessen eines Wirbels und insbesondere der Frequenz der in diesen auftretenden Druckschwankungen in einem Vortex-Durchflusssensor. Dieser Membranaufbau ermöglicht eine kompaktere Ausgestaltung des Strömungssensors und insbesondere die genauere Erfassung der Strömungsgeschwindigkeit, insbesondere geringere Strömungsgeschwindigkeiten.

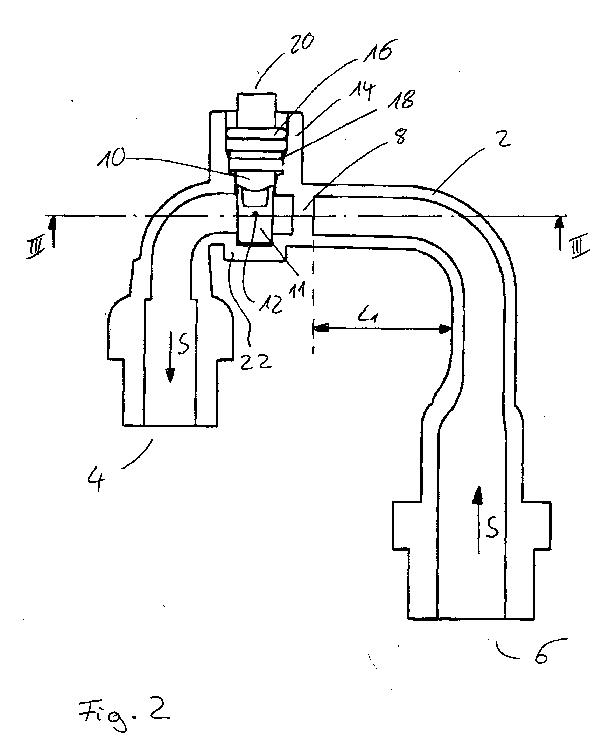

Die Messsonde 10 mit der Membran ist im gezeigten Ausführungsbeispiel als Baueinheit in einem Gehäuse angeordnet, wie es in der europäischen Patentanmeldung EP 02 008 386 in den Figuren 2, 3 und 8 sowie der zugehörigen Beschreibungsteilen offenbart ist. Bezüglich der genauen Ausgestaltung dieses Gehäuses sowie der Anordnung der Membran darin wird auf die Offenbarung in dieser Patentanmeldung verwiesen. Das Gehäuse weist an seinem vorderen Ende einen verjüngten fingerförmigen Fortsatz 11 auf, in dem die Membran 12 angeordnet ist. Vorzugsweise ist nur eine Membran 12 vorgesehen, welche von beiden Seiten mit Druck beaufschlagbar ist und auf diese Weise sehr einfach einen Differenzdruck in einem Wirbel hinter der Obstruktion 8 bestimmen kann. Die Membran 12 ist dabei so in der Strömung angeordnet, dass sich die Membranoberflächen parallel zu der Strömungsrichtung erstrecken.

Die Messsonde 10 ist in einer Öffnung in dem Rohrbogen 2 derart eingesetzt, dass der Fortsatz 11 sich in den Innenraum des Rohrbogens 2 in Strömungsrichtung S gesehen im Bereich hinter der Obstruktion 8 erstreckt. Die Öffnung 14 ist als Aufnahme für die Messsonde 10 einstückig mit dem Rohrbogen 2 ausgebildet. In der Öffnung 14 ist die Messsonde 10 durch einen Sicherungsbügel 16 befestigt. Am Gehäuse der Messsonde 10 ist ein Dichtungsring 18 vorgesehen, welcher die Öffnung 14 bei eingesetzter Messsonde 10 abdichtet. Das Ende 20 der Messsonde 10 weist die erforderlichen elektrischen Anschlüsse auf bzw. ist mit elektrischen Anschlussleitungen verbunden.

Figur 2 zeigt eine Draufsicht auf die Schnittebene in der Darstellung gemäß Figur 1. Die Obstruktion 8 ist in dem Rohrbogen 2 bzw. an der Rohrleitung so angeordnet, dass die in Strömungsrichtung S gesehene vordere Kante der Obstruktion 8 um das Maß L₁von einer vorangehenden Krümmung des Rohres beabstandet ist. Wie in Figur 2 zu sehen ist, erstreckt sich der Fortsatz 11 der Messsonde 10 ebenfalls quer durch den gesamten Querschnitt der Rohrleitung 2 hindurch, so dass das Frontende des Fortsatzes 11 in eine entsprechende Ausnehmung 22 an der der Öffnung 14 entgegengesetzten Seite des Rohrbogens 2 eingreift.

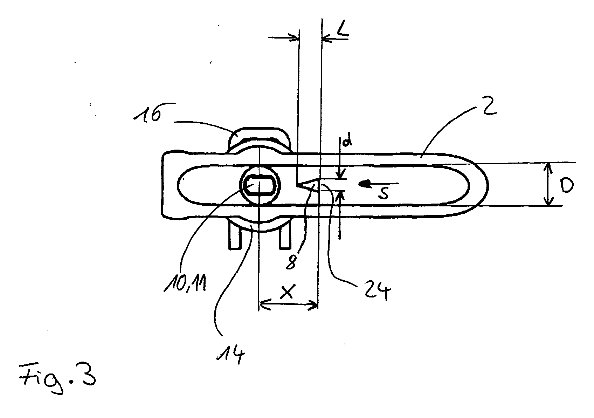

Figur 3 zeigt eine Schnittansicht entlang der Linie III-III in Figur 2. Anhand der Ansicht von Figur 3 werden bevorzugte Abmessungen der erfindungsgemäßen Anordnung erläutert. Der Rohrleitungsabschnitt, d.h. der Abschnitt des Rohrbogens 2, in dem die Obstruktion 8 und die Messsonde 10 angeordnet sind, weist einen Durchmesser D auf. In Strömungsrichtung S weist die Obstruktion 8, welche einen dreieckigen Querschnitt aufweist, eine Länge L auf. In der Richtung quer zur Strömungsrichtung S weist die Obstruktion an ihrer Basis, d.h. ihrer in Strömungsrichtung S vorderen Kante 24 eine Breite d auf. Von dieser vorderen Kante 24 läuft die Obstruktion in Strömungsrichtung spitz bzw. dreiecksförmig zu. Die Obstruktion weist über ihre gesamte Erstreckung in Durchmesserrichtung durch die Rohrleitung des Rohrbogens 2 einen konstanten Querschnitt auf, wie er in Figur 3 gezeigt ist. Die Obstruktion 8 ist dabei zentral im Inneren des Rohres des Rohrbogens 2 angeordnet.

Die Strömungsrichtung S vordere Kante bzw. Vorderkante 24 der Obstruktion 8 ist von der Mitte der Messsonde 10, in der die Membran 12 angeordnet ist, um das Maß X beabstandet.

Bevorzugte Abmessungen für den Abstand L, den Abstand L₁ (siehe Figur 2), den Durchmesser D, den Abstand X und die Breite d und deren Verhältnisse zueinander sind in nachfolgender Tabelle aufgelistet. Dabei sind in der Tabelle die bevorzugten Minimal- und Maximalwerte für die einzelnen Größen angegeben. Ferner sind drei konkrete Ausführungsbeispiele in den Spalten A, B und C angegeben, welche die jeweiligen Abmessungen für bestimmte bevorzugte Ausführungsformen des Strömungssensors angeben.

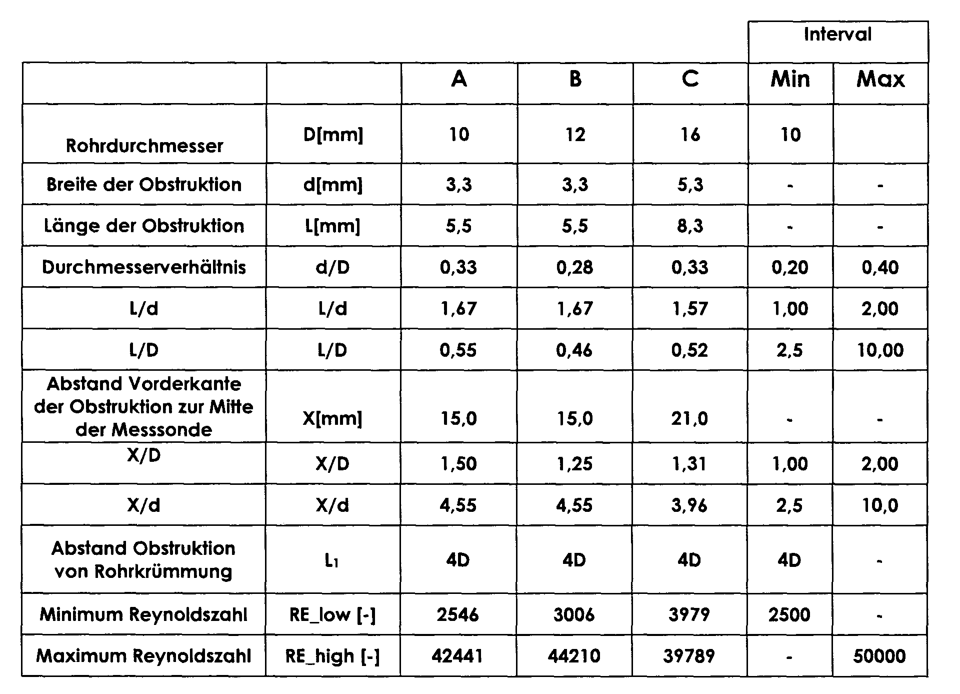

Die letzen beiden Spalten der Tabelle geben die Minimal- bzw. Maximalwerte für die jeweiligen Größen an. Mit dieser Ausgestaltung lassen sich Reynoldszahlen zwischen 2500 und 50.000 erreichen.

### Bezugszeichenliste

- 2: - Rohrbogen
- 4,6: - Enden
- 8: - Obstruktion
- 10: - Messsonde
- 11 1: - Fortsatz
- 12: - Membran
- 14: - Öffnung
- 16: - Sicherungsbügel
- 18: - Dichtungsring
- 20: - Ende
- 22: - Ausnehmung
- 24: - Vorderkante
- S: - Strömungsrichtung

## Patentansprüche

1. Strömungssensor mit einer in eine Strömung hineinragenden Obstruktion (8)und zumindest einer Messsonde (10) zum Ausmessen eines von der Obstruktion (8) erzeugten Wirbels, **dadurch gekennzeichnet, dass** die Messsonde (10) zumindest eine Membran (12) und ein direkt auf der Membran (12) angeordnetes Messelement zum Erfassen der Membranauslenkung aufweist.

2. Strömungssensor nach Anspruch 1, **dadurch gekennzeichnet, dass** die Obstruktion (8) und die Messsonde (10) in einem Rohrleitungsabschnitt (2) angeordnet sind.

3. Strömungssensor nach Anspruch 2, **dadurch gekennzeichnet, dass** der Rohrleitungsabschnitt (2) einen Durchmesser D aufweist, welcher größer als 10 mm ist.

4. Strömungssensor nach Anspruch 2 oder 3, **dadurch gekennzeichnet, dass** die Obstruktion (8) einstückig mit dem Rohrleitungsabschnitt (2) ausgebildet ist.

5. Strömungssensor nach einem der vorangehenden Ansprüche, **dadurch gekennzeichnet, dass** die Membran (12) von einer Seite zur Bestimmung eines absoluten Druckwertes mit einem Druck beaufschlagbar ist.

6. Strömungssensor nach einem der Ansprüche 1 bis 4, **dadurch gekennzeichnet, dass** die Membran (12) von beiden Seiten mit jeweils einem Druck zur Bestimmung eines Differenzdruckes beaufschlagbar ist.

7. Strömungssensor nach einem der vorangehenden Ansprüche, **dadurch gekennzeichnet, dass** die Membran (12) in einer Halterung druckdicht eingespannt ist und eine elektrisch isolierende Schicht unmittelbar auf die Membran (12) und das auf dieser angeordnete Messelement aufgebracht ist, welche von einer zumindest flüssigkeitsdichten amorphen Metallschicht überdeckt ist.

8. Strömungssensor nach einem der vorangehenden Ansprüche, **dadurch gekennzeichnet, dass** die Messsonde (10) in einem Gehäuse angeordnet ist, welches in eine Öffnung (14) in dem Rohrleitungsabschnitt (2) eingesetzt ist.

9. Strömungssensor nach einem der vorangehenden Ansprüche, **dadurch gekennzeichnet, dass** die Messsonde (10) in die Obstruktion (8) integriert ist.

10. Strömungssensor nach einem der Ansprüche 1 bis 8, **dadurch gekennzeichnet, dass** die Messsonde (10) in Strömungsrichtung (S) hinter der Obstruktion (8) angeordnet ist.

11. Strömungssensor nach Anspruch 10, **dadurch gekennzeichnet, dass** in Strömungsrichtung (S) die Vorderkante (24) der Obstruktion (8) von der Mitte der Messsonde (10) um das Maß X beabstandet ist und der Rohrleitungsabschnitt (2), in dem die Obstruktion (8) angeordnet ist, einen Durchmesser D aufweist, wobei das Verhältnis X/D zwischen 1 und 2 liegt.

12. Strömungssensor nach Anspruch 10 oder 11, **dadurch gekennzeichnet, dass** in Strömungsrichtung (S) die Vorderkante (24) der Obstruktion (8) von der Mitte der Messsonde (10) um das Maß X beabstandet ist und die Obstruktion (8) quer zur Strömungsrichtung eine Breite d aufweist, wobei das Verhältnis X/d zwischen 2,5 und 10 liegt.

13. Strömungssensor nach einem der vorangehenden Ansprüche, **dadurch gekennzeichnet, dass** die Obstruktion (8) in Strömungsrichtung (S) eine Länge L und quer zur Strömungsrichtung (S) eine Breite d aufweist, wobei das Verhältnis L/d zwischen 1 und 2 liegt.

14. Strömungssensor nach einem der vorangehenden Ansprüche, **dadurch gekennzeichnet, dass** die Obstruktion (8) in Strömungsrichtung (S) eine Länge L und der Rohrleitungsabschnitt (2), in dem die Obstruktion (8) angeordnet ist, einen Durchmesser D aufweist, wobei das Verhältnis L/D zwischen 0,4 und 10 liegt.

15. Strömungssensor nach einem der vorangehenden Ansprüche, **dadurch gekennzeichnet, dass** die Obstruktion (8) quer zur Strömungsrichtung (S) eine Breite d und der Rohrleitungsabschnitt (2), in dem die Obstruktion (8) angeordnet ist, einen Durchmesser D aufweist, wobei das Verhältnis d/D zwischen 0,2 und 0,4 liegt.

16. Strömungssensor nach einem der vorangehenden Ansprüche, **dadurch gekennzeichnet, dass** die Obstruktion (8) in Strömungsrichtung (S) mindestens um einen Abstand L₁ hinter einer Krümmung eines Rohrleitungsabschnittes, in dem die Obstruktion (8) angeordnet ist, gelegen ist, wobei L₁=4*D und D der Durchmesser des Rohrleitungsabschnittes ist.
